# EUROPEAN PATENT APPLICATION

(11) **EP 1 455 515 A1**
(43) Date of publication of application: **08.09.2004**
(21) Application number: 03290573.9
(22) Date of filing: 07.03.2003
(51) Int. Cl.: H04N 1/00

(54) **Fax machine with a housing having two half-shells**

(71) Applicant: Sagem SA, 75512 Paris (FR)
(72) Inventor: Veigl, Johann, 1100 Wien (AT); Potakowskij, Christiph, 1100 Wien (AT)
(74) Representative: Bloch, Gérard

(57) **Abstract**

The housing is formed from a bottom half-shell (25) and a top half-shell (26), secured on one another in a pivotable manner, by means of a closure device which can be released solely by the top half-shell (26) being pivoted in the direction of its open position and/or by the forces to which it is subjected when such a pivoting operation is initiated.

## Description

The invention relates to a machine, e.g. fax machine, having a housing which is formed from a bottom half-shell and a top half-shell, which two half-shells are secured on one another in a pivotable manner, there being provided at least one releasable closure device by means of which the two half-shells can be secured on one another in a non-movable manner.

According to the known prior art, the top half-shell is locked with the bottom half-shell in the closed state of the housing with the aid of two locking levers which are secured on the side walls of one of the two half-shells and engage in supports formed on the other half-shell. The operations of engaging the levers in the supports, and disengaging them therefrom, have to be carried out manually by the user, which nevertheless reduces the ease of use.

According to another known solution, a latching hook is secured in a movable manner in the top half-shell of the housing of a fax machine, said latching hook being connected to the drive motor of the machine, and being pivoted by the same, and thus being engaged in a support arranged in the bottom half-shell, or disengaged therefrom. This solution, however, involves some degree of design outlay (movable mounting of the latching hook and drive connection between the motor and latching hook).

The invention is preferably used for a machine of the type cited in the introduction which is provided with a printing arrangement comprising a printer roller and a printing head which is pressed resiliently against the latter, the printer roller being arranged in the top half-shell and the printing head being arranged in the bottom half-shell, and a bar-like printing-head holder which serves as an abutment for resilient means acting on the printing head being secured in the bottom half-shell.

In the case of such a machine, the functionally induced action of the printing head being pressed against the printer roller in the closed state of the machine results in the locking levers and the supports being constantly subjected to not inconsiderable forces. If the locking levers and supports are secured on housing parts, these housing parts thus have to be reinforced, in particular, in the region of the locking levers and of the supports, which may take place, for example, by the housing parts themselves being provided with glass-fibre reinforcements and/or by reinforcing ribs being formed on the housing parts. These measures constitute additional material-related outlay, which ultimately gives rise to additional production costs for the housing.

### Advantages of the proposed solution:

The invention provides that the closure device can be released solely by the top half-shell being pivoted in the direction of its open position and/or by the forces to which it is subjected when such a pivoting operation is initiated.
On account of this design, the user is only required to pivot the top half-shell in order to open the housing, and need not carry out any additional steps, for example the actuation of levers which open the closure device.

According to a particularly preferred embodiment of the invention, it is provided that the locking hook is secured in a non-movable manner on a spindle of the printer roller, said spindle being connected firmly to the top half-shell, and the support is formed by a section of the printing-head holder which projects laterally beyond the printing head.
- The locking hook and the section serving as its support are thus secured on stable components of the machine and thus cannot transmit any forces to the housing. It is possible to do away with any reinforcements of the housing which are necessitated by such forces.
- Furthermore, the locking hooks are self-arresting, which means that the user need only close the housing, but no longer has to engage any movable levers in their supports.

The invention shall be better understood by means of the attached drawings, in which
- Figure 1 is a sectional view of the fax machine of the invention ;
- Figure 2 is a sectional view of the housing of the machine of figure 1 ;
- Figure 3 is a perspective view of the printing head holder of the machine and
- Figure 4 is another perspective view of the printing head holder of the machine.

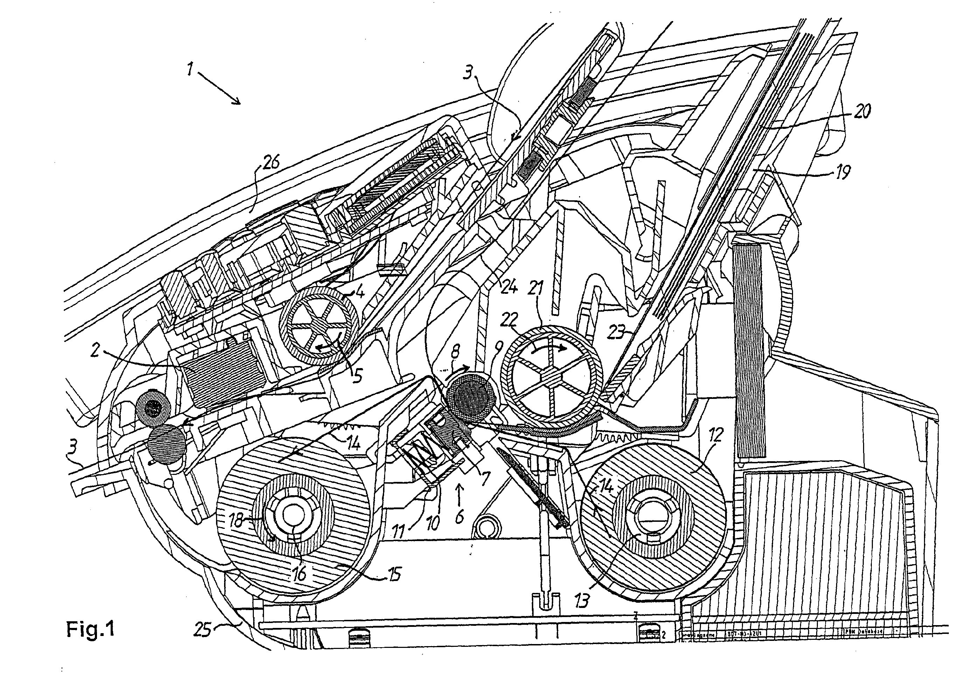

The fax machine 1 shown in Figure 1 has a scanning arrangement 2 by means of which an original sheet can be scanned in order for the image information, for example alphanumeric characters, contained on this original sheet to be converted into digital signals. Such an original sheet can be transported in a stepwise manner along a transporting path 3, which is specified by a solid line in Figure 1. In order for an original sheet to be transported in a stepwise manner, that is to say driven in a stepwise manner, the machine has an original-sheet drive roller 4 which can be driven in rotation for the purpose of driving an original sheet in the direction of an arrow 5, that is to say in the clockwise direction.
The machine also contains a printing arrangement 6, which is provided with a printing head 7. The printing head 7 is a thermal printing head which is of essentially bar-like design and can be used to carry out dot-form printing. This printing takes place on a blank sheet, which can be driven in a stepwise manner with the aid of a printer roller 9 which can be driven in the direction of the arrow 8, that is to say likewise in a clockwise direction. The printer roller 9 interacts with the printing head 7. The printer roller 9 is mounted such that it can be rotated, but otherwise retained in a stationary manner, in the machine. The printing arrangement 6 is held against the printer roller 9 with the aid of symbolically illustrated resilient means 10, with the result that the printing head 7 is pressed resiliently against the printer roller 9. A bar-like printing-head holder 11, which is mounted in a stationary manner in the housing and in the exemplary embodiment of the drawings is designed with a U-shaped profile, is provided for this purpose. The resilient means 10 are supported, at one end, on this printing-head holder 11 and, at the other end, on the printing head 7.
The printing head 7 can be used for carrying out thermal transfer printing. During this process, a thermal transfer film is heated in a punctiform manner with the aid of the printing head 7, which results in a wax-like dye which is attached to the thermal transfer film being transferred to the blank sheet which is to be printed. The abovementioned thermal transfer film is wound up onto a first reel 12, the first reel 12, with the supply of thermal transfer film, being borne by an unwinding core 13. From the first reel 12, the thermal transfer film is guided along a transporting path 14 to a second reel 15, which is borne by a winding core 16. The winding core 16 can be driven in the direction of an arrow 18 from the printer roller 9, via a toothed gear mechanism which cannot be seen in Figure 1.
For the purpose of printing a blank sheet, such a blank sheet has to be removed, that is to say separated, from a blank-sheet holder 19 containing a stack 20 of such blank sheets. For this purpose, the machine has a blank-sheet-separating roller 21, which can be driven in rotation in the direction of an arrow 22, that is to say likewise in the clockwise direction.

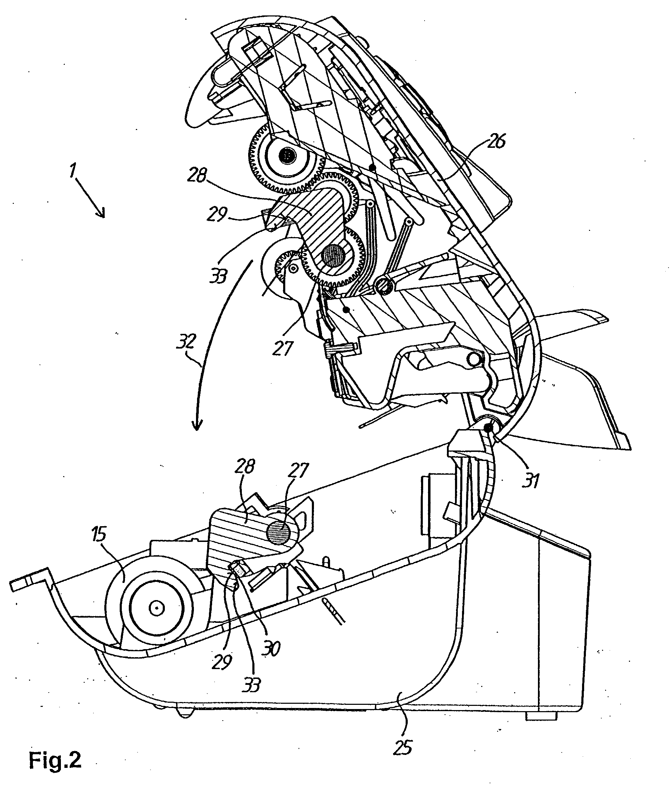

As can be gathered from Figure 2, the housing of the machine 1 is formed from a bottom half-shell 25 and a top half-shell 26. These two half-shells 25, 26 are secured on one another such that they can be pivoted about the pivot axis 31, with the result that the housing can be opened very easily by virtue of the top half-shell 26 being raised and pivoted. This is necessary, for example, in order to remove jammed paper or to exchange the reels 12, 15 with thermal transfer film.
The invention outlined hereinbelow is preferably used for a fax machine corresponding to Figure 1, for which reason such a machine is illustrated in the enclosed figures. Rather than being restricted to being used with such machines, however, the invention may be used with any desired machine which has a housing made up of two half-shells which are secured on one another in a pivotable manner.
The closure device, to the design of which the present invention relates, is of two-part configuration; its first part is connected to the top half-shell 26 and its second part is connected to the bottom half-shell 25. In the closed state of the housing, these two parts interact such that they secure the two half-shells 25, 26 on one another in a non-moveable manner.
There are various conceivable embodiments for the closure device, for example it would be possible to provide a magnet which is secured on the top half-shell 26 and interacts with a counter-plate secured on the bottom half-shell 25.
Figure 2 illustrates a particularly preferred embodiment of a closure device according to the invention. The latter comprises, in this case, a locking hook 28 which is designed with a latching surface 29 and is connected to the top half-shell 26; Also provided is a support which is connected to the bottom half-shell 25. The locking hook 28 and support are arranged such that the locking hook 28 engages behind the support in the closed state of the housing and its latching surface 29 thus comes into abutment against a bearing surface of this support.
The latching surface 29 and the bearing surface of the support run essentially tangentially to the pivoting path 32 of the top half-shell 26.
It is possible for the latching surface 29 to have an elevation and for the bearing surface to have a recess corresponding to this elevation, the elevation and recess latching with one another in the closed state of the housing. This achieves particularly reliable locking of the housing and the user receives a clear indication that the closed position has been reached due to a jerk in the closing movement being produced when the elevation latches in the recess. These functions are equally achieved if the recess is arranged in the latching surface 29 of the locking hook 28 and the elevation is arranged in the bearing surface of the support.

Since both the blank sheets which are to be printed and the thermal transfer film are arranged between the printer roller 9 and the printing head 7 during normal operation, it is necessary, for the purpose of carrying out the service work which has just been mentioned, for these two components to be separated from one another when the housing is opened. This can be achieved very easily, just by the top half-shell 26 being pivoted, if the printer roller 9 is arranged in the top half-shell 26 and the printing head 7 is arranged in the bottom half-shell 25.
However, the need for the printing head 7 to be pressed against the printer roller 9, this being necessary for proper functioning of the printing arrangement 6, proves to be problematic here. In order to achieve this, the printing-head holder 11 and the printer roller 9 have to be retained, as far as possible, in a non-moveable manner in relation to one another in the closed state of the housing.

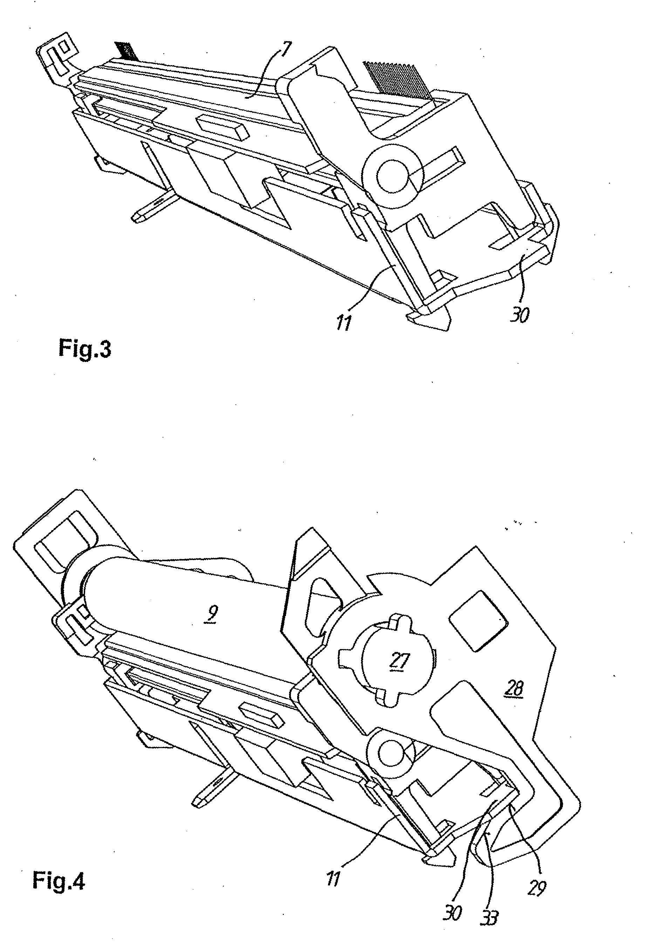

For this purpose, the invention provides a locking hook 28 which is secured in a non-moveable manner on a spindle 27 of the printer roller 9. This spindle 27 is retained rigidly in relation to the top half-shell 26, that is to say, rather than it rotating along with the printer roller 9, the printer roller 9 is mounted such that it can be rotated about this spindle 27.
The bar-like printing-head holder 11 serves as the support, in which this hook engages in the closed state of the housing. Said printing-head holder is designed with a section 30 which can be seen in Figures 3 and 4 and projects laterally beyond the printing head 7. The locking hook 28 is level with said section 30, as a result of which it engages behind the same in the closed state of the housing. The locking hook 28 is designed with a latching surface 29, which comes into abutment against said section 30.
It should be mentioned here that, in Figure 2, a locking hook 28 is depicted both in the top half-shell 26 and in the bottom half-shell 25. In actual fact, only one such locking hook 28 is provided. It has only been depicted in the bottom half-shell 25 as well in order for it to be possible to illustrate it hooking into the printing-head holder 11 as has just been discussed.
The spacings from the latching surface 29 and the section 30 to the pivot axis 31 have to be selected here so as to result in the latching surface 29 butting in a close-fitting manner against the section 30. This is achieved, in particular, if the latching surface 29 and that surface region of the section 30 up against which the latching surface 29 comes into abutment are of planar design and run tangentially to the pivoting path 32 of the top half-shell 26.
In the case of the exemplary embodiment shown in the drawings, a bevel 33, which encloses an obtuse angle with the latching surface 29, is formed on the locking hook 28 following the latching surface 29. When the top half-shell 26 is pivoted from the open position, which is shown in Figure 2, into the closed state, this bevel 33, in the first instance, positions itself loosely against the edge of the section 30. As pivoting continues, the locking hook 28 is drawn continuously behind the section 30 by this bevel 33, which, overall, results in a smooth, straightforwardly proceeding locking operation.

Up until now, mention has been made of just a single locking hook 28, because only one such hook 28 can be seen in the enclosed drawings. For the practical implementation of the invention, however, two such locking hooks 28 are usually provided, these being arranged on the two end sides of the printer roller 9 and thus in the regions of the two side walls of the housing which run parallel to the image plane of Figures 1 and 2.

## Claims

1. Machine, e.g. fax machine, having a housing which is formed from a bottom half-shell (25) and a top half-shell (26), which two half-shells (25, 26) are secured on one another in a pivotable manner, there being provided at least one releasable closure device by means of which the two half-shells (25, 26) can be secured on one another in a non-moveable manner, **characterized in that** the closure device can be released solely by the top half-shell (26) being pivoted in the direction of its open position and/or by the forces to which it is subjected when such a pivoting operation is initiated.

2. Machine according to Claim 1, **characterized in that** the closure device comprises a locking hook (28), which is designed with a latching surface (29) and is connected to one of the two half-shells (25, 26), and a support, which is connected to the other of the two half-shells (25, 26), the locking hook (28) engaging behind the support in the closed state of the housing and its latching surface (29) thus coming into abutment against a bearing surface of this support.

3. Machine according to Claim 1 or 2, **characterized in that** the latching surface (29) and the bearing surface of the support run essentially tangentially to the pivoting path (32) of the top half-shell (26).

4. Machine according to Claim 3, **characterized in that** a bevel (33), which encloses an obtuse angle with the latching surface (29), is formed on the locking hook (28) following the latching surface (29).

5. Machine according to Claim 3 or 4, **characterized in that** either the latching surface (29) or the bearing surface has an elevation and the other of these two components has a recess corresponding to this elevation, the elevation and recess latching with one another in the closed state of the housing.

6. Machine according to one of Claims 2 to 5 having a printing arrangement (6) which comprises a printer roller (9) and a printing head (7) which is pressed resiliently against the latter, the printer roller (9) being arranged in the top half-shell (26) and the printing head (7) being arranged in the bottom half-shell (25), and a bar-like printing-head holder (11) which serves as an abutment for resilient means (10) acting on the printing head (7) being secured in the bottom half-shell (25), **characterized in that** the locking hook (28) is secured in a non-moveable manner on a spindle (27) of the printer roller (9), said spindle being connected firmly to the top half-shell (26), and the support is formed by a section (30) of the printing-head holder (11) which projects laterally beyond the printing head (7).
